# EUROPÄISCHE PATENTANMELDUNG

(11) **EP 2 587 190 A2**
(43) Veröffentlichungstag der Anmeldung: **01.05.2013**
(21) Anmeldenummer: 12007306.9
(22) Anmeldetag: 24.10.2012
(51) Int. Cl.: F25B 5/04, F25B 49/02

(54) **Kühl- und/oder Gefriergerät**

(30) Priorität: 26.10.2011 DE 102011116976
(71) Anmelder: Liebherr-Hausgeräte Ochsenhausen GmbH, 88416 Ochsenhausen (DE)
(72) Erfinder: Straub, Mario, 88453 Erolzheim (DE)
(74) Vertreter: Herrmann, Uwe

(57) **Zusammenfassung**

Die vorliegende Erfindung betrifft ein Kühl- und/oder Gefriergerät mit wenigstens einem Gefrierteil (45) sowie mit wenigstens einem Kühlteil (55), sowie mit wenigstens einem Kältemittelkreislauf, der wenigstens einen dem Gefrierteil zugeordneten Gefrierteilverdampfer (40) und wenigstens einen dem Kühlteil zugeordneten Kühlteilverdampfer (50) aufweist, die in dem Kältemittelkreislauf in Serie angeordnet sind, wobei der Kältemittelkreislauf des Weiteren wenigstens einen Kompressor (10) sowie wenigstens ein Absperrelement (80) aufweist, das derart ausgebildet ist, dass es in der Kompressorstillstandszeit eine Druckdifferenz zwischen Niederdruckseite und Hochdruckseite aufrecht erhält, und das in Strömungsrichtung des Kältemittels vorzugsweise vor dem Gefrierteilverdampfer angeordnet ist, wobei wenigstens eine Steuerungs- und/oder Regelungseinheit vorgesehen ist, die derart ausgebildet ist, dass sie in einem ersten Betriebsmodus den Kompressor mit kurzzeitiger Einschaltdauer einschaltet und vorzugsweise zeitgleich das Absperrelement öffnet, wobei die kurzzeitige Einschaltdauer des Kompressors derart bemessen ist, dass das im Kältemittelkreislauf befindliche Kältemittel im Gefrierteilverdampfer verdampft und in den Kühlteilverdampfer kein oder wenig flüssiges Kältemittel gelangt, so dass nur oder im Wesentlichen nur der Gefrierfeilverdampfer Kühlleistung abgibt

## Beschreibung

Die vorliegende Erfindung betrifft ein Kühl- und/oder Gefriergerät mit wenigstens einem Gefrierteil sowie mit wenigstens einem Kühlteil, sowie mit wenigstens einem Kältemittelkreislauf, der wenigstens einen dem Gefrierteil zugeordneten Gefrierteilverdampfer und wenigstens einen dem Kühlteil zugeordneten Kühlteilverdampfer aufweist, die in dem Kältemittelkreislauf in Serie angeordnet sind.

Bei Geräten mit einem Gefrierfach, beispielsweise mit einem oder mehreren sogenannten Vier-Sterne-Fächern, bestehen besondere technische Anforderungen, um die Temperatur in dem Vier-Sterne-Fach bei niedrigen Umgebungstemperaturen (< 25°C) bei -18°C oder kälter zu halten.

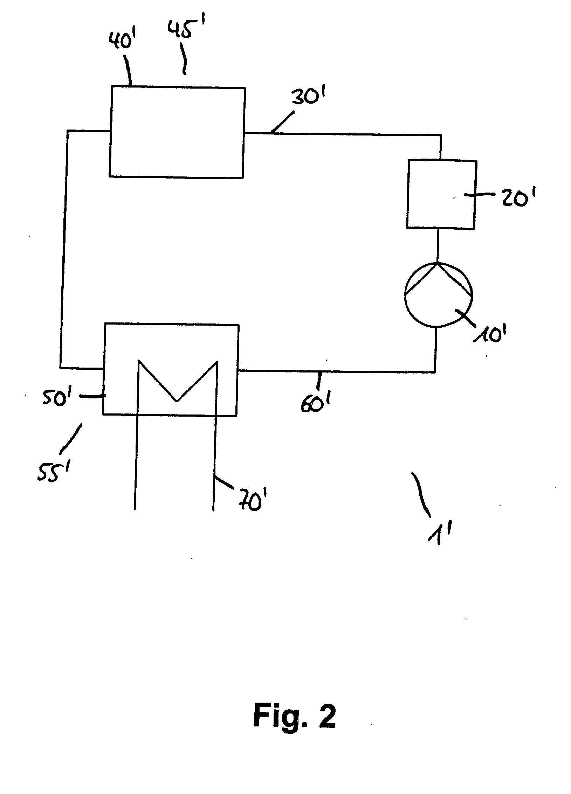

Aus dem Stand der Technik ist es bislang bekannt, bei derartigen Geräten mit einem Vier-Sterne-Fach und einer Umgebungstemperaturkompensation ein derartiges Gerät mit einem Umgebungstemperaturfühler und einer Heizung im Kühlteil zu versehen (vgl. Figur 2). Bei niedrigen Umgebungstemperaturen wird diese Heizung sodann aktiviert bzw. getaktet. Hierdurch wird der Kältebedarf im Kühlteil erhöht, weshalb sich die Kompressorlaufzeit erhöht. Die daraus resultierende längere Kompressorlaufzeit bewirkt eine Reduzierung der Temperatur im Vier-Sterne-Fach. Die Temperaturen im Kühlteil werden somit nicht abgesenkt.

Wird diese Kompensationsheizung nicht eingesetzt, führt der geringe Kältebedarf im Kühlteil und die damit verbundene geringere Kompressoreinschaltdauer zwangsläufig zu einer Erwärmung im Gefrierfach bzw. Vier-Sterne-Fach, so dass die Temperaturen höher als -18°C liegen.

Der Einsatz der Heizung führt zwar zur Einhaltung der gewünschten Gefrierteiltemperaturen, bringt jedoch die Nachteile erhöhter Kosten sowie eines erhöhten Energieverbrauchs aufgrund des Wärmeeintrages mit sich.

Es ist daher die Aufgabe der vorliegenden Erfindung, ein Kühl- und/oder Gefriergerät der eingangs genannten Art in vorteilhafter Weise weiterzubilden, insbesondere dahingehend, dass die Temperaturen in einem Gefrierfach eines Kühl- und/oder Gefriergerätes auch bei niedrigen Umgebungstemperaturen einfach reduziert bzw. konstant gehalten werden können, insbesondere ohne dass dabei eine Heizung im Kühlteil eingesetzt werden muss.

Diese Aufgabe wird erfindungsgemäß durch ein Kühl- und/oder Gefriergerät mit den Merkmalen des Anspruchs 1 gelöst. Danach ist vorgesehen, dass der Kältemittelkreislauf des Weiteren wenigstens einen Kompressor sowie wenigstens ein Absperrelement aufweist, das derart ausgebildet ist, dass es in der Kompressorstillstandszeit eine Druckdifferenz zwischen Niederdruckseite und Hochdruckseite aufrecht erhält, und das in Strömungsrichtung des Kältemittels vorzugsweise vor dem Gefrierteilverdampfer angeordnet ist, wobei wenigstens eine Steuerungs- und/oder Regelungseinheit vorgesehen ist, die derart ausgebildet ist, dass sie in einem ersten Betriebsmodus den Kompressor mit kurzzeitiger Einschaltdauer einschaltet und vorzugsweise zeitgleich das Absperrelement öffnet, wobei die kurzzeitige Einschaltdauer des Kompressors derart bemessen ist, dass das gesamte oder ein Teil des im Kältemittelkreislauf befindlichen flüssigen Kältemittels im Gefrierteilverdampfer verdampft und in den Kühlteilverdampfer kein oder wenig flüssiges Kältemittel gelangt, so dass nur oder im Wesentlichen nur der Gefrierteilverdampfer Kühlleistung abgibt. Durch das Einschalten des Kompressors wird das flüssige Kältemittel in den Gefrierteilverdampfer gefördert, in dem es weitgehend oder vollständig verdampft.

Das Absperrelement ist während der gesamten kurzzeitigen Einschaltphase des Kompressors offen oder zumindest zeitweise offen, während der Kompressor in Betrieb ist.

Durch die Erfindung ergibt sich der Vorteil, dass die Temperaturen in einem Gefrierfach eines Kühl- und/oder Gefriergerätes auch bei niedrigen Umgebungstemperaturen auf dem gewünschten Niveau gehalten oder reduziert werden können, ohne dass dabei eine Heizung im Kühlteil eingesetzt werden muss. Auf den Einsatz einer Heizung im Kühlteil kann verzichtet werden.

Das Kühl- und/oder Gefriergerät kann insbesondere ein Kühl- und/oder Gefriergerät mit wenigstens einem Gefrierteil und mit wenigstens einem Kühlteil sein, wobei das Gefrierteil beispielsweise wenigstens ein Gefrierfach und das Kühlteil beispielsweise ein Kühlfach und/oder ein Kaltlagerfach aufweist bzw. aus diesem besteht. Insbesondere kann das Gefrierteil ein Vier-Sterne-Fach (bzw. 4*-Fach) sein oder umfassen.

Es ist folglich vorzugsweise nicht mehr notwendig, eine Heizung im Kühlteil eines Kühl- und/oder Gefriergerätes einzusetzen, da das Gefrierteil ausreichend mit Kühlleistung versorgt werden kann und zwar derart, dass nur oder vorzugsweise das Gefrierteil eine Abkühlung erfährt und nicht zugleich auch das Kühlteil. Dies wird erfindungsgemäß dadurch erreicht, dass die Einschaltdauer des Kompressors in dem ersten Betriebsmodus derart bemessen ist, dass das in den Gefrierteilverdampfer geförderte Kältemittel vollständig oder weitgehend in dem Gefrierteilverdampfer verdampft und in dem Kühlteilverdampfer kein oder nur wenig flüssiges Kältemittel ankommt, so dass in dem ersten Betriebsmodus nur oder überwiegend der Gefrierteilverdampfer Kälteleistung erzeugt.

In dem ersten Betriebsmodus liegt die Einschaltdauer vorzugsweise im Bereich von 10 Minuten oder darunter. Dabei handelt es sich nur um einen exemplarischen Wert, der die Erfindung nicht beschränkt.

Der erste Betriebsmodus kann ein Betriebsmodus des Kühl- und/oder Gefriergerätes sein, der "Semi-Kühlung" genannt wird. Grundsätzlich ist es möglich, dass das Kühl- und/oder Gefriergerät in einem oder mehreren weiteren Betriebsmodi betreibbar ist.

Das Absperrelement hat die Aufgabe bzw. wird derart angesteuert, dass es in der Stillstandzeit des Kompressors die Druckdifferenz zwischen Saug- und Druckseite des Kompressors aufrecht erhält. Vorzugsweise ist in dem ersten Betriebsmodus das Absperrelement geschlossen, wenn der Kompressor steht und wenigstens zeitweise in der Zeitspanne offen, in der der Kompressor in Betrieb ist. Vorzugsweise ist vorgesehen, dass der Kompressor eingeschaltet wird und gleichzeitig das Absperrelement geöffnet wird. Wird der Kompressor ausgeschaltet, erfolgt vorzugsweise zeitgleich ein Schließen des Absperrelementes. Denkbar ist auch ein zeitlich versetztes Öffnen und Schließen des Absperrelementes.

Wird kein Absperrelement eingesetzt, wird in der Zeit kurz nach dem Einschalten des Kompressors zunächst die die Druckdifferenz aufgebaut. In dieser Phase sinkt die Verdampfungstemperatur langsam ab. Erst nach einer gewissen Zeit ist die Verdampfungstemperatur niedrig genug, um das Gefrierteil zu kühlen. Durch den Einsatz eines Absperrelementes steht bereits unmittelbar nach dem Starten des Kompressors Kälteleistung in dem Gefrierteil zur Verfügung.

Des Weiteren kann vorgesehen sein, dass das Absperrelement ein Stoppventil oder eine Rückschlagklappe oder dergleichen ist oder umfasst, wobei das Stoppventil insbesondere ein Zwei-Wege-Magnet-Ventil ist.

Erfindungsgemäß weist der Kältemittelkreislauf wenigstens einen Verdampfer für einen Gefrierteil und wenigstens einen Verdampfer für ein Kühlteil auf.

Der Verdampfer für das Gefrierteil und der Verdampfer für das Kühlteil sind seriell angeordnet, d. h. dass das Kältemittel durchströmt zunächst den Verdampfer für das Gefrierteil und danach den Verdampfer für das Kühlteil.

Wesentlich ist, dass die kurzzeitige Einschaltdauer des Kompressors derart bemessen ist, dass das im Kältemittelkreislauf befindliche Kältemittel im Verdampfer für das Gefrierteil verdampft und im Verdampfer des Kühlteiles kein oder wenig flüssiges Kältemittel ankommt, so dass bei dieser Betriebsart nur oder überwiegend nur der Verdampfer für das Gefrierteil Kühlleistung abgibt.

Außerdem kann vorgesehen sein, dass das Kühl- und/oder Gefriergerät wenigstens ein Sensormittel aufweist, mittels dessen die Umgebungstemperatur des Kühl- und/oder Gefriergerätes ermittelbar ist. Hierdurch wird es vorteilhaft möglich, den Kältemittelkreislauf genauer und damit effizienter mittels der Steuerungs- und/oder Regelungseinheit regeln zu können.

In einer bevorzugten Ausgestaltung der Erfindung ist die Steuerungs- und/oder Regelungseinheit derart ausgebildet, dass sie den ersten Betriebsmodus, d.h. die "Semi-Kühlung" in Abhängigkeit von der Umgebungstemperatur veranlaßt. In diesem Fall erfolgt die kurze Taktung von Kompressor und Stoppventil oder einem sonstigen Absperrelement in Abhängigkeit von der Umgebungstemperatur. Bei geringen Umgebungstemperaturen besteht die Möglichkeit, dass das Kühlteil keinen Kältebedarf meldet und der Kompressor daher ausgeschaltet bleibt, was jedoch dazu führen kann, dass die Temperatur in dem Gefrierteil über einen Sollwert hinaus ansteigt. Um dies zu verhindern, wird die erfindungsgemäße Semi-Kühlung eingesetzt, bei der ausschließlich oder im Wesentlichen in dem Gefrierteilverdampfer eine Kälteleistung erzeugt wird.

Denkbar ist es, dass die Kompressorstillstandszeit, d.h. die Kompressorausschaltdauer konstant gewählt und die Kompressoreinschaltzeit mittels des Steuerungs- und/oder Regelungsmittels anhand der mittels des Sensormittels ermittelten Umgebungstemperatur variabel einstellbar, insbesondere steuer- und/oder regelbar ist. Vorzugsweise ist vorgesehen, die Kompressoreinschaltzeit mit abnehmender Umgebungstemperatur zu steigern.

Des Weiteren kann vorgesehen sein, dass die Kompressorstillstandszeit und die Kompressoreinschaltzeit mittels des Steuerungs- und/oder Regelungsmittels anhand der mittels des Sensormittels ermittelten Umgebungstemperatur variabel einstellbar, insbesondere steuer- und/oder regelbar sind.

Außerdem ist es denkbar, dass die Kompressoreinschaltdauer konstant gewählt und mittels des Steuerungs- und/oder Regelungsmittels anhand der mittels des Sensormittels ermittelten Umgebungstemperatur bei sinkender Umgebungstemperatur die Kompressorstillstandszeit anpassbar, insbesondere absenkbar ist.

Das Absperrelement ist vorzugsweise stromabwärts des Kompressors angeordnet.

Ferner kann vorgesehen sein, dass das Absperrelement stromabwärts des Verflüssigers und/oder stromaufwärts des Verdampfers für das Gefrierteil angeordnet ist.

Die Wahl des ersten Betriebsmodus kann alternativ oder zusätzlich zu der Umgebungstemperatur von anderen Parametern bzw. von der Geräteauslegung abhängen. So ist es beispielsweise denkbar, dass wenigstens ein Temperaturfühler für das Gefrierteil vorgesehen ist und dass der erste Betriebsmodus gewählt wird, wenn dieser Temperaturfühler einen Kältebedarf meldet, jedoch in dem Kühlteil kein Kältebedarf besteht.

Die vorliegende Erfindung kann nicht nur vorteilhaft bei niedrigen Umgebungstemperaturen genutzt werden, sondern alternativ oder zusätzlich zur aktiven Temperatureinstellung bzw. -regelung in dem Gefrierteil. Dies hat den Vorteil, dass die Verdampferoberfläche im Kühlteil vergrößert werden kann, was sich positiv auf den Energieverbrauch des Gerätes auswirkt. Bei einer Vergrößerung der Verdampferoberfläche des Kühlteilverdampfers besteht die Gefahr, dass das Gefrierteil zu warm wird. Durch die vorliegende Erfindung kann das Gefrierfach gekühlt werden, ohne dass das Kühlteil gekühlt wird.

Ein weiterer Parameter, in Abhängigkeit dessen der erste Betriebsmodus gewählt werden kann, ist die Temperaturreglerstellung im Kühlteil. Bei einer relativ warmen Reglerstellung im Kühlteil kann die Erfindung, d.h. die Semi-Kühlung genutzt werden, um die Temperatur im Gefrierfach auf dem gewünschten Niveau, z.B. bei - 18 °C gehalten werden.

Vorzugsweise ist weiterhin vorgesehen, dass die Temperaturregelung im Kühlteil übergeordnet erfolgt. Meldet das Kühlteil Kältebedarf, wird nicht der erste Betriebsmodus, d.h. die Semi-Kühlung gewählt, sondern der normale Kühlbetrieb. Dadurch werden die geforderten Temperaturen im Kühlteil erreicht.

Auch kann es notwenig sein, die erfindungsgemäße Semi-Kühlung abzuschalten, um ein sicheres Abtauen im Kühlteil zu gewährleisten (azyklische Abtauung).

Die Erfindung betrifft des Weiteren ein Verfahren zum Betrieb eines Kühl- und/oder Gefriergerätes nach einem der Ansprüche 1 bis 11, wobei in einem ersten Betriebsmodus der Kompressor mit kurzzeitiger Einschaltdauer eingeschaltet wird vorzugsweise zeitgleich das Absperrelement geöffnet wird, wobei die kurzzeitige Einschaltdauer des Kompressors derart bemessen ist, dass ein Teil oder das gesamte im Kältemittelkreislauf befindliche flüssige Kältemittel aufgrund des Betriebes des Kompressors in den Gefrierteilverdampfer gefördert wird und dann im Gefrierteilverdampfer verdampft und in den Kühlteilverdampfer kein oder wenig flüssiges Kältemittel gelangt, so dass nur oder im Wesentlichen nur der Gefrierteilverdampfer Kühlleistung abgibt.

Das erfindungsgemäße Verfahren ist vorzugsweise entsprechend der Merkmale der Ansprüche 1 bis 11 ausgeführt.

Denkbar ist es, dass ein zweiter Betriebsmodus gewählt wird, wenn das Kühlteil Kältebedarf meldet, wobei in dem zweiten Betriebsmodus eine Temperaturregelung in dem Kühlteil erfolgt. Wie ausgeführt, kann dieser zweite Betriebsmodus, d.h. der Normalbetrieb des Gerätes Vorrang haben gegenüber dem ersten Betriebsmodus. D.h. meldet das Kühlteil einen Kältebedarf, wird der zweite und nicht der erste Betriebsmodus gewählt.

Der erste Betriebsmodus kann in Abhängigkeit von dem Temperaturistwert in dem Gefrierteil und/oder in Abhängigkeit von der Umgebungstemperatur und/oder in Abhängigkeit von dem Temperatursollwert für das Kühlteil und/oder zur aktiven Temperatureinstellung, vorzugsweise zur aktiven Temperaturregelung des Gefrierteils gewählt werden.

Weitere Einzelheiten und Vorteile der Erfindung sollen nun anhand eines in der Zeichnung näher dargestellten Ausführungsbeispiels näher erläutert werden.

Es zeigen:
- Figur 1:: eine schematische Darstellung eines Kältemittelkreislaufes eines erfindungsgemäßen Kühl- und/oder Gefriergerätes; und
- Figur 2:: eine schematische Darstellung eines bekannten Kältemittelkreislaufes eines Kühl- und/oder Gefriergerätes.

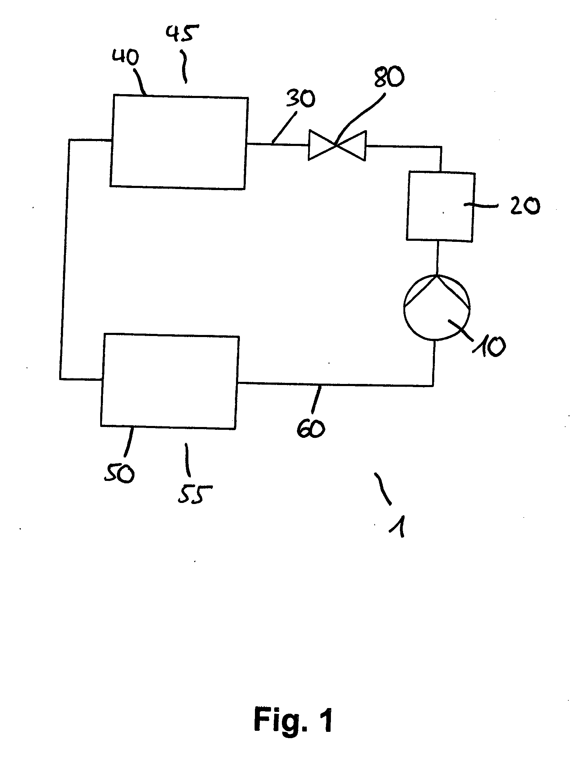

Figur 1 zeigt in schematischer Darstellung den Kältemittelkreislauf 1 eines erfindungsgemäßen Kühl- und/oder Gefriergerätes. Dabei weist der Kältemittelkreislauf 1 einen Verdichter 10 bzw. Kompressor 10 auf, dem stromabwärts ein Verflüssiger 20 folgt. Zwischen der Kapillare 30 und dem Verflüssiger 20 befindet sich als Stoppventilelement ein Zwei-Wege-Magnet-Ventil 80, wobei an Stelle des Zwei-Wege-Magnet-Ventils 80 auch alternativ eine Rückschlagklappe oder ein vergleichbares Element eingesetzt werden kann. Nach der Kapillare 30 folgt sodann der Verdampfer 40 für das 4*-Fach 45.

Das Kältemittel verlässt sodann den Verdampfer 40 und strömt weiter zum Verdampfer 50 des Kühlteils 55 und wird von dort mittels der Saugleitung 60 wieder zum Kompressor 10 geleitet.

Der in Figur 1 gezeigte Kältemittelkreislauf 1 wird dabei mittels eines nicht näher gezeigten Steuerungs- und/oder Regelungsmittels, das beispielsweise in die Gerätesteuerung des Kühl- und/oder Gefriergerätes integriert sein kann, derart gesteuert, dass der Kompressor 10 kurzzeitig eingeschaltet und zeitgleich das Stoppventil 80 geöffnet wird, so dass es zu einer sogenannten "Semi-Kühlung" kommt.

Durch das Stoppventil 80 wird die Druckdifferenz zwischen Nieder- und Hochdruckseite während der Kompressorstillstandszeit gehalten. Schaltet nun der Kompressor 10 ein und öffnet das Stoppventil 80, steht sogleich Kälteleistung im 4*-Fach 45 zur Verfügung.

In der Zeit kurz nach dem Starten des Kompressors 10 verdampft das flüssige Kältemittel zunächst im 4*-Fach 45. Im Kühlteil 55 kommt selbst kein flüssiges Kältemittel mehr an bzw. nur noch sehr geringe Mengen. Dadurch wird in dieser Zeit nur das 4*-Fach 45 gekühlt.

Wird nun der Kompressor 10 bereits nach einer kurzen Laufzeit abgeschaltet, ist nur im 4*-Fach 45 Kältemittel verdampft (und eventuell geringe Mengen im Kühlteil 55).

Es wird somit effektiv nur das 4*-Fach 45 gekühlt, weshalb diese Vorgehensweise auch "Semi-Kühlung" genannt wird.

Um diese Regelung zu ermöglichen, ist es erforderlich, während der Kompressorstillstandszeit die Druckdifferenz zwischen Saug- und Druckseite teilweise oder vollständig aufrechtzuerhalten, was mittels des Absperrelementes, also z.B. mittels des Stoppventils 80 bzw. alternativ mit einer Rückschlagklappe gewährleistet wird, da es andernfalls in der Zeit kurz nach dem Einschalten des Kompressors 10 zunächst zu einem Aufbau der Druckdifferenz kommen würde.

In dieser Phase sinkt die Verdampfungstemperatur des Verdampfers 40 langsam ab. Erst nach einer gewissen Zeit ist die Verdampfungstemperatur des Verdampfers 40 niedrig genug, um das 4*-Fach 45 zu kühlen. Durch den Einsatz des Stoppventils 80 oder einem vergleichbaren Stoppventilelement steht bereits nach dem Starten des Kompressors 10 Kälteleistung im 4*-Fach 45 zur Verfügung.

Die (kurze) Taktung des Stoppventils 80 und des Kompressors 10 erfolgt in Abhängigkeit von der Umgebungstemperatur, die mittels eines nicht näher gezeigten Umgebungstemperaturfühlers erfasst werden kann.

Es kann vorgesehen sein, dass die Kompressoreinschaltdauer für diese Art der Kompensationsschaltung bzw. Semi-Kühlung konstant ist und mit sinkender Umgebungstemperatur die Kompressorstillstandszeit sinkt.

Alternativ und/oder zusätzlich kann vorgesehen sein, dass die Kompressorstillstandszeit konstant ist und die Kompressorlaufzeit variabel in Abhängigkeit von der Umgebungstemperatur gewählt werden kann.

Ebenfalls ist es möglich, dass sowohl die Kompressorstillstandszeit sowie auch die Kompressoreinschaltzeit variabel in Abhängigkeit der Umgebungstemperatur sind.

Es ist möglich, dass die Regelung der Temperatur im Kühlteil 55 übergeordnet erfolgen kann und hierdurch Priorität gegenüber der Kompensationsschaltung bzw. Semi-Kühlung genießt. Hierdurch werden die geforderten Temperaturen im Kühlteil 55 erreicht. Ebenfalls kann es notwendig werden, dass die Kompensationsschaltung zeitweise deaktiviert wird, um ein sicheres Abtauen im Kühlteil 55 zu gewährleisten, was als azyklische Abtauung bezeichnet wird.

Eine weitere Möglichkeit besteht noch darin, diese Kompensationsregelung nicht nur für niedrige Umgebungstemperaturen zu nutzen, sondern diese Semi-Kühlung zur aktiven Regelung des Vier-Sterne-Fachs 45 zu nutzen. Dies hat den Vorteil, dass die Verdampferoberfläche im Kühlteil 55 vergrößert werden kann, was sich positiv auf den Energieverbrauch des Gerätes auswirkt. Bei einer Vergrößerung der Verdampferoberfläche des Kühlteilverdampfers 50 besteht nämlich die Gefahr, dass das 4*-Fach 45 zu warm wird.

Durch den Einsatz der Semi-Kühlung kann das 4*-Fach 45 gekühlt werden, ohne dass das Kühlteil 55 gekühlt wird. Ebenfalls kann dies bei warmer Reglerstellung genutzt werden, um die Temperatur im 4*-Fach 45 bei kälter als -18°C zu halten.

Im Gegensatz zu der vorstehend beschriebenen erfindungsgemäßen Ausführungsform eines Kältemittelkreislaufes 1 eines erfindungsgemäßen Kühl- und/oder Gefriergerätes ist es bei einem vergleichbaren Kältemittelkreislauf eines bekannten Kühl- und/oder Gefriergerätes erforderlich gewesen, eine Kompensationsheizung 70' vorzusehen, wie sich dies aus Figur 2 ergibt.

Dabei weist dieser Kältemittelkreislauf 1' ebenfalls einen Verdichter 10' bzw. Kompressor 10' auf, dem stromabwärts ein Verflüssiger 20' folgt. Zwischen der Kapillare 30' und dem Verflüssiger 20' befindet sich hier aber kein Stoppventilelement, sondern sofort die Kapillare 30'. Nach der Kapillare 30' folgt sodann der Verdampfer 40' für das 4*-Fach 45'.

Das Kältemittel verläßt auch hier sodann den Verdampfer 40' und strömt weiter zum Verdampfer 50' des Kühlteils 55' und wird von dort mittels der Saugleitung 60' wieder zum Kompressor 10' geleitet.

Die Möglichkeit, auf die Kompensationsheizung 70' verzichten zu können, erlaubt es, Kosten einzusparen, da sowohl die Herstellungskosten als auch die Montagekosten gesenkt werden können. Zugleich kann auch der Energieverbrauch gesenkt werden.

Ferner ist es möglich, durch den Wegfall der Kompensationsheizung 70' Kundenreklamationen zu reduzieren, da die durch die Kompensationsheizung 70' erzeugte Wärme irritierend auf die Nutzer des Kühl- und/oder Gefriergerätes wirken kann. Insbesondere kann diese Irritation dazu führen, dass die durch die Kompensationsheizung 70' erzeugte Wärme als Fehlfunktion angesehen und deshalb reklamiert wird.

## Patentansprüche

1. Kühl- und/oder Gefriergerät mit wenigstens einem Gefrierteil (45) sowie mit wenigstens einem Kühlteil (55), sowie mit wenigstens einem Kältemittelkreislauf (1), der wenigstens einen dem Gefrierteil (45) zugeordneten Gefrierteilverdampfer (40) und wenigstens einen dem Kühlteil (55) zugeordneten Kühlteilverdampfer (50) aufweist, die in dem Kältemittelkreislauf (1) in Serie angeordnet sind, **dadurch gekennzeichnet, dass** der Kältemittelkreislauf (1) des Weiteren wenigstens einen Kompressor (10) sowie wenigstens ein Absperrelement aufweist, das derart ausgebildet ist, dass es in der Kompressorstillstandszeit eine Druckdifferenz zwischen Niederdruckseite und Hochdruckseite aufrecht erhält, und das in Strömungsrichtung des Kältemittels vorzugsweise vor dem Gefrierteilverdampfer (40) angeordnet ist, wobei wenigstens eine Steuerungs- und/oder Regelungseinheit vorgesehen ist, die derart ausgebildet ist, dass sie in einem ersten Betriebsmodus den Kompressor (10) mit kurzzeitiger Einschaltdauer einschaltet und vorzugsweise zeitgleich das Absperrelement öffnet, wobei die kurzzeitige Einschaltdauer des Kompressors (10) derart bemessen ist, dass im Kältemittelkreislauf (1) befindliches flüssiges Kältemittel im Gefrierteilverdampfer (40) verdampft und in den Kühlteilverdampfer (50) kein oder wenig flüssiges Kältemittel gelangt, so dass nur oder im Wesentlichen nur der Gefrierteilverdampfer (40) Kühlleistung abgibt.

2. Kühl- und/oder Gefriergerät nach Anspruch 1, **dadurch gekennzeichnet, dass** das Absperrelement zumindest ein Stoppventil (80) oder zumindest eine Rückschlagklappe oder dergleichen ist oder umfasst, wobei das Stoppventil (80) insbesondere ein Zwei-Wege-Magnet-Ventil (80) ist.

3. Kühl- und/oder Gefriergerät nach Anspruch 1 oder 2, **dadurch gekennzeichnet, dass** es sich bei dem Gefrierteil (45) um ein Vier-Sterne-Fach handelt.

4. Kühl- und/oder Gefriergerät nach einem der vorhergehenden Ansprüche, **dadurch gekennzeichnet, dass** das Kühl- und/oder Gefriergerät wenigstens ein Sensormittel aufweist, mittels dessen die Umgebungstemperatur des Kühl- und/oder Gefriergerätes ermittelbar ist.

5. Kühl- und/oder Gefriergerät nach Anspruch 4, **dadurch gekennzeichnet, dass** die Steuer- oder Regelungseinheit derart ausgebildet ist, dass die Kompressoreinschaltdauer konstant ist und die Kompressorausschaltdauer von der Umgebungstemperatur abhängig gewählt wird, wobei vorzugsweise vorgesehen ist, dass die Kompressorausschaltdauer mit sinkender Umgebungstemperatur abnimmt.

6. Kühl- und/oder Gefriergerät nach Anspruch 4, **dadurch gekennzeichnet, dass** die Steuer- oder Regelungseinheit derart ausgebildet ist, dass die Kompressorausschaltdauer konstant ist und die Kompressoreinschaltdauer von der Umgebungstemperatur abhängig gewählt wird, wobei vorzugsweise vorgesehen ist, dass die Kompressoreinschaltdauer mit sinkender Umgebungstemperatur zunimmt.

7. Kühl- und/oder Gefriergerät nach Anspruch 4, **dadurch gekennzeichnet, dass** die Steuer- oder Regelungseinheit derart ausgebildet ist, dass sowohl die Kompressorausschaltdauer als auch die Kompressoreinschaltdauer von der Umgebungstemperatur abhängig gewählt wird.

8. Kühl- und/oder Gefriergerät nach einem der vorhergehenden Ansprüche, **dadurch gekennzeichnet, dass** das Absperrelement zwischen dem Verflüssiger (20) des Kältemittelkreislaufes und dem Gefrierteilverdampfer (40) angeordnet ist.

9. Kühl- und/oder Gefriergerät nach einem der vorhergehenden Ansprüche, **dadurch gekennzeichnet, dass** die Steuer- oder Regelungseinheit derart ausgebildet ist, dass sie zum Zwecke der Temperaturregelung in dem Kühlteil in einem zweiten Betriebsmodus den Kompressor in Abhängigkeit von dem Kältebedarf in dem Kühlteil betreibt.

10. Kühl- und/oder Gefriergerät nach Anspruch 9, **dadurch gekennzeichnet, dass** die Steuer- oder Regelungseinheit derart ausgebildet ist, dass der zweite Betriebsmodus gegenüber dem ersten Betriebsmodus Vorrang hat.

11. Kühl- und/oder Gefriergerät nach einem der vorhergehenden Ansprüche, **dadurch gekennzeichnet, dass** wenigstens ein Temperaturfühler vorgesehen ist, der derart angeordnet ist, dass er die Gefrierteiltemperatur oder einen dafür repräsentativen Wert misst, und dass die Steuer- oder Regelungseinheit derart ausgebildet ist, dass sie den ersten Betriebsmodus wählt, wenn die durch den genannten Temperaturfühler gemessene Temperatur einen Grenzwert übersteigt.

12. Verfahren zum Betrieb eines Kühl- und/oder Gefriergerätes nach einem der Ansprüche 1 bis 11, **dadurch gekennzeichnet, dass** in einem ersten Betriebsmodus der Kompressor (10) mit kurzzeitiger Einschaltdauer eingeschaltet wird vorzugsweise zeitgleich das Absperrelement geöffnet wird, wobei die kurzzeitige Einschaltdauer des Kompressors (10) derart bemessen ist, dass im Kältemittelkreislauf (1) befindliches flüssiges Kältemittel im Gefrierteilverdampfer (40) verdampft und in den Kühlteilverdampfer (50) kein oder wenig flüssiges Kältemittel gelangt, so dass nur oder im Wesentlichen nur der Gefrierteilverdampfer (40) Kühlleistung abgibt.

13. Verfahren nach Anspruch 12, **dadurch gekennzeichnet, dass** ein zweiter Betriebsmodus gewählt wird, wenn das Kühlteil (55) Kältebedarf meldet, wobei in dem zweiten Betriebsmodus eine Temperaturregelung in dem Kühlteil (55) erfolgt.

14. Verfahren nach Anspruch 12 oder 13, **dadurch gekennzeichnet, dass** der erste Betriebsmodus in Abhängigkeit von dem Temperaturistwert in dem Gefrierteil und/oder in Abhängigkeit von der Umgebungstemperatur und/oder in Abhängigkeit von dem Temperatursollwert für das Kühlteil (55) und/oder zur aktiven Temperatureinstellung, vorzugsweise zur aktiven Temperaturregelung des Gefrierteils (45) gewählt wird.
